# EUROPÄISCHE PATENTSCHRIFT

(11) **EP 2 134 585 B1**
(45) Veröffentlichungstag und Bekanntmachung des Hinweises auf die Patenterteilung: **03.11.2010**
(21) Anmeldenummer: 08714310.3
(22) Anmeldetag: 28.03.2008
(51) Int. Cl.: B62D 3/12, B62D 5/04

(54) **ZAHNSTANGE ODER GEWINDESTANGE**
TOOTHED OR THREADED ROD
CRÉMAILLÈRE OU TIGE FILETÉE

(30) Priorität: 19.04.2007 DE 102007018919
(43) Veröffentlichungstag der Anmeldung: 23.12.2009
(73) Patentinhaber: ThyssenKrupp Presta Aktiengesellschaft, 9492 Eschen (LI)
(72) Erfinder: BILMAYER, Roman, A-9493 Mauren (LI); ECKSTEIN, Ralf, A-6800 Feldkirch (AT)
(74) Vertreter: Hofmann, Ralf U.
(86) Internationale Anmeldenummer: PCT/AT2008/000114
(87) Internationale Veröffentlichungsnummer: WO 2008/128260

(56) Entgegenhaltungen:
- DE-A1- 10 011 140
- JP-A- 2001 030 930

## Beschreibung

Die Erfindung bezieht sich auf eine Zahnstange oder Gewindestange, insbesondere für eine Lenkvorrichtung für ein Kraftfahrzeug, welche ein erstes stangenförmiges Teil, das als Funktionselement der Zahnstange oder Gewindestange mindestens ein Element zur Umwandlung einer Rotations- in eine Translationsbewegung, insbesondere eine Verzahnung und/oder ein Gewinde für den Eingriff einer Gewindemutter oder eines Gewindetriebs, aufweist, und ein zweites stangenförmiges Teil umfasst, das mit dem ersten stangenförmigen Teil verbunden ist und das vorzugsweise mindestens ein weiteres Funktionselement der Zahnstange oder Gewindestange aufweist, wobei zumindest eines der stangenförmigen Teile einen an einem Verbindungsende des stangenförmigen Teils mündenden Hohlraum aufweist, in dem für die Verbindung mit dem anderen stangenförmigen Teil ein Verbindungszapfen durch einen Presssitz gehalten ist.

Zahnstangen oder Gewindestangen, beispielsweise in Lenkvorrichtungen von Kraftfahrzeugen eingesetzte Zahnstangen oder Gewindestangen, weisen üblicherweise verschiedene Funktionsbereiche auf, die jeweils einen Abschnitt der Längserstreckung der Zahnstange oder Gewindestange bilden. Ein Funktionsbereich dient zur Umformung der Drehbewegung, wie sie beispielsweise von einem Steuerrad eines Kraftfahrzeuges in ein Lenksystem eingeleitet wird, in eine Translationsbewegung, wie sie in diesem Beispiel zur Verschwenkung der Räder des Kraftfahrzeuges benötigt wird. Hierzu besitzt ein Funktionsbereich als Funktionselement mindestens eine Verzahnung und/oder ein Gewinde, für den Eingriff einer Gewindemutter, insbesondere Kugelgewindemutter, oder eines Gewindetriebes, insbesondere Kugelgewindetriebes. An ihren Enden in axialer Richtung weist die Zahnstange oder Gewindestange Funktionselemente auf für eine Befestigung von Elementen, die mit dem Rad verbunden sind, beispielsweise die Spurstangen. Ferner kann in einem weiteren Funktionsbereich beispielsweise zusätzlich zu einer Verzahnung im ersten Funktionsbereich ein Gewinde, z. B. für einen Kugelgewindetrieb, vorhanden sein, um mittels einer auf diesem Gewinde angeordneten Mutter einen Gewindetrieb auszubilden. Dieser Gewindetrieb kann für eine Servounterstützung der Lenkbewegung genutzt werden. Statt dessen kann die Zahnstange oder Gewindestange in mindestens einem weiteren Funktionsbereich auch andere Arten von Funktionselementen aufweisen. Beispielsweise kann an einem Stangenabschnitt der Zahnstange oder Gewindestange ein Kolben für eine Servounterstützung der Lenkung vorhanden sein oder Formelemente zu dessen Befestigung. Auch ein für eine Axialführung der Zahnstange oder Gewindestange dienender glatter Stangenabschnitt, der eine Lagerfläche bildet, ist als ein solcher Funktionsbereich anzusehen. Zur Ausbildung der verschiedenen Funktionselemente sind bei der Herstellung der Zahnstange oder Gewindestange unterschiedliche Fertigungsschritte durchzuführen.

Um eine bessere Anpassung an die Ausbildung der einzelnen Funktionsbereiche zu ermöglichen, sind bereits Zahnstangen bekanntgeworden, bei denen ein erstes und ein zweites stangenförmiges Teil, welches jeweils ein Funktionselement der Zahnstange aufweist, miteinander verbunden sind. Neben einer bekannten Verschweißung dieser beiden stangenförmigen Teile geht weiterhin aus der WO 2006/066309 A1 auch eine Schraubverbindung der beiden stangenförmigen Teile hervor. Hierbei besitzt ein an einem Teil angebrachter Verbindungszapfen ein Außengewinde und ist in ein Innengewinde eines den Verbindungszapfen aufnehmenden axialen Hohlraums des anderen stangenförmigen Teils eingeschraubt. Zur Sicherung dieser Schraubverbindung dient in einem Ausführungsbeispiel ein Klebstoff. In einem anderen Ausführungsbeispiel ist die Wand, die den den Zapfen aufnehmenden Hohlraum umschließt, an einer Stelle in eine Vertiefung des Zapfens eingedrückt. Durch diese Ausbildung der Zahnstange mit der Aufteilung der Zahnstange in zwei oder mehrere Funktionsbereiche aufweisende stangenförmige Teile werden zwar Erleichterungen und Verbesserungen bei der Herstellung gegenüber einer einstückigen Ausbildung der Zahnstange erreicht, die beschriebene Gewindeverbindung bringt aber auch Nachteile mit sich, u. a. einen entsprechenden Herstellungsaufwand und Beschränkungen bezüglich der Ausbildung der zu verbindenden Teile.

Aus der DE 198 22 313 A1 geht eine Zahnstange für eine Lenkvorrichtung für ein Kraftfahrzeug mit den eingangs genannten Merkmalen hervor. Ein erstes stangenförmiges Teil, welches die Verzahnung aufweist ist im Bereich seines Endes, in welchem es mit den Spurstangen verbunden ist, mit einer Kolbenstange verbunden, die ein zweites stangenförmiges Teil bildet. Hierbei weist das erste stangenförmige Teil endseitig einen Hohlraum auf und ein Verbindungszapfen des zweiten stangenförmigen Teils besitzt einen Außendurchmesser, der größer als der Durchmesser des Hohlraums ist. Beim Einsetzen des Verbindungszapfens in den Hohlraum schneidet eine Zahnung des Verbindungszapfens in die Innenumfangfläche des Hohlraums ein, wobei auch ein gewisser Presssitz ausgebildet wird. Zur Sicherung gegen ein Herausziehen wird die Umfangswand des ersten stangenförmigen Teils hinter dem Verbindungszapfen von außen her verstemmt, wodurch ein Formschluss ausgebildet wird.

Eine ähnliche Einrichtung ist auch aus der JP 2001 030930 A bekannt.

Die DE 1 525 201 A zeigt weiters eine nicht gattungsgemäße gehärtete Schraube, welche aus mehreren Hülsen mit äußeren Schraubengewinden zusammengesetzt ist, die nach dem Härten und Schleifen durch in die Hülsen eingesetzte Kerne in Form von geraden Stangen aus ungehärtetem Eisen zu einer einzigen Schraube zusammengefügt worden sind. Die Verbindung der Hülsen mit den Kernen kann durch Aufschrumpfen oder durch ein geeignetes Bindemittel erfolgen. Als Ausführungsbeispiel wird eine Angelschraube genannt. Dies wird als Schraube angesehen, welche zwei Scharnierteile eines Scharniergelenks drehend miteinander verbindet, wobei nur geringe Zugbelastungen aufzunehmen sind. Die in der DE 1 525 201 A beschriebene Ausbildungsart ermöglicht die Ausbildung von langen gehärteten Schrauben. Die aus dieser Schrift hervorgehende Schraube ist nicht gattungsgemäß, da es sich nicht um eine für eine Lenkvorrichtung einsetzbare Gewindestange handelt, welche zur Umwandlung einer Rotations- in eine Translationsbewegung geeignet ist.

Aus der DE 100 11 140 A1 geht eine Schubstange hervor, die ein Zahnstangenteil, ein Gewindespindelteil und ein stangenförmiges Teil umfasst. Diese Teile sind über Verbindungszapfen miteinander verbunden. Der zeichnerischen Darstellung kann die Verbindung über die Verbindungszapfen als Schraubverbindung entnommen werden.

Aufgabe der Erfindung ist es, eine einfach und vorteilhaft herstellbare Zahnstange bzw. Gewindestange der eingangs genannten Art bereitzustellen. Erfindungsgemäß gelingt dies durch eine Zahnstange bzw. Gewindestange mit den Merkmalen des Anspruchs 1 bzw. durch ein Verfahren mit den Merkmalen des Anspruchs 13.

Bei einer Zahnstange oder Gewindestange gemäß der Erfindung, die insbesondere ein Getriebeglied darstellt, erfolgt die Verbindung des ersten mit dem zweiten stangenförmigen Teil über ein zusätzliches Verbindungsteil, welches erste und zweite Verbindungszapfen aufweist, die jeweils in einem Hohlraum des jeweiligen stangenförmigen Teils durch einen Presssitz gehalten sind. Die stangenförmigen Teile selbst müssen somit nicht mit einem Verbindungszapfen ausgebildet werden, sondern können beispielsweise einen über die Länge durchgehenden Hohlraum aufweisen, also in Form von Rohren ausgebildet sein. Die stangenförmigen Teile sind dadurch in besonders einfacher und vorteilhafter Form ausbildbar. Durch den Presssitz des Verbindungsteils mit dem jeweiligen stangenförmigen Teil kann eine zuverlässige Verbindung zwischen dem ersten und dem zweiten stangenförmigen Teil erreicht werden. Es wurde bei einer Erprobung unter Betriebsbedingungen festgestellt, dass hierbei die bei einer Zahnstange oder Gewindestange, insbesondere für eine Lenkvorrichtung für ein Kraftfahrzeug, auftretenden Belastungen zuverlässig und dauerhaft übertragen werden können.

Insbesondere kann das Verbindungsteil gerade ausgebildet sein mit axial ausgerichteten, koaxial, bevorzugt genau in einer Achse, zueinander liegenden Verbindungszapfen. In Verbindung mit ebenfalls geraden stangenförmigen Teilen kann eine insgesamt gerade Zahnstange oder Gewindestange ausgebildet werden.

Vorteilhafterweise ist der Verbindungszapfen bzw. die Verbindungszapfen des Verbindungsteils wesentlich kürzer als das erste und zweite stangenförmige Teil, vorzugsweise beträgt die Länge des Verbindungszapfens weniger als das Vierfache, nochmals bevorzugt weniger als das Doppelte, jedoch immer mehr als die Hälfte des Betrages, des Außendurchmessers des Verbindungszapfens.

Ein jeweiliger in einem Hohlraum durch einen Presssitz gehaltener Verbindungszapfen ist im Bereich des Presssitzes mit Materialerhebungen versehen, insbesondere Wülsten, Stegen, Zähnen oder dgl.. Die Höhen dieser Materialerhebungen liegen hierbei mit Vorzug im Bereich von 0,03 mm bis 0,4 mm. Zusätzlich oder statt dessen könnte auch die Wand des jeweiligen einen Verbindungszapfen aufnehmenden Hohlraums mit Materialerhebungen versehen sein, insbesondere Wülsten, Stegen, Zähnen o. dgl.. Die Höhen dieser Materialerhebungen liegen hierbei ebenfalls mit Vorzug im Bereich von 0,03 mm bis 0,4 mm.

Mit Vorteil werden diese Materialerhebungen durch einen Umformprozess, wie Rollieren oder Rändeln, in die Oberfläche des Verbindungszapfens und nach Möglichkeit auch in die Innenoberfläche des Hohlraums eingebracht. Der Vorteil besteht in den damit verbundenen Materialverfestigungen, was zur Reduktion von Spänen und der Verbesserung der Verbindung führt.

In einer vorteilhaften Ausführungsform der Erfindung ist die Außenkontur des Verbindungszapfens im Wesentlichen zylindermantelförmig, d. h. abgesehen von den vorzugsweise vorhandenen äußeren Materialerhebungen, endseitigen Anfasungen bzw. Einlaufschrägen, Nebenformelemente o. dgl.. Ein den jeweiligen Verbindungszapfen aufnehmender innerer Hohlraum ist vorzugsweise im Wesentlichen zylindrisch ausgebildet, d. h. abgesehen von gegebenenfalls vorhandenen Materialerhebungen, einem endseitigen Einlauftrichter o. dgl..

Der zwischen dem jeweiligen Verbindungszapfen und dem jeweiligen stiftförmigen Teil ausgebildete Presssitz ist in axialer Richtung zumindest kraftschlüssig. Durch Ausnützung von Restelastizitäten ist es auch denkbar und möglich, eine in axiale Richtung formschlüssig wirkende Komponente der Verbindung auszubilden, beispielsweise durch Entspannung eines Abschnitts einer an der den Hohlraum des stangenförmigen Teils begrenzenden Wand angeordneten, in Längsrichtung verlaufenden Materialerhebung, welcher Abschnitt bezogen auf die Einschubrichtung des Verbindungszapfens in den inneren Hohlraum hinter einer an der äußeren Oberfläche des Verbindungszapfens angeordneten, in Umfangsrichtung verlaufenden Materialerhebung liegt.

In Umfangsrichtung ist ein jeweiliger Verbindungszapfen im jeweiligen Hohlraum durch den Presssitz zumindest kraftschlüssig gehalten. Vorzugsweise ist die Verbindung zusätzlich formschlüssig ausgebildet. Beispielsweise kann dies durch in axialer Richtung verlaufende Materialerhebungen an der Außenfläche des Verbindungszapfens und/oder an der den Hohlraum umgebenden Wand in ihrem Bereich des Presssitzes erreicht werden, welche sich bei der Ausbildung des Presssitzes in das Material des anderen der über die Pressverbindung verbundenen Teile einformen bzw. eingraben. Vorzugsweise werden die hierbei ausgebildeten Vertiefungen nicht oder nur zu einem geringen Grad spanabhebend sondern vielmehr ganz oder zumindest überwiegend durch Materialverdrängung gebildet. Mit Vorteil ist vor der umformenden Herstellung der Materialerhebungen der Innendurchmesser des zylindrisch ausgebildeten Hohlraums etwas grösser als der Außendurchmesser des zylindermantelförmigen Verbindungszapfens, so dass beide Teile mit etwas Spiel ineinander geschoben werden könnten, wobei erst durch die mit der Erzeugung der Materialerhebungen, in zumindest eines der beiden Teile, verbundene Durchmesservergrößerung bzw. Durchmesserverkleinerung die für den Pressverband notwendige teilweise Überdeckung bewirkt wird. Dadurch wird es möglich Form- Mass- und Lageabweichungen der zylindrischen Innenform des Hohlraums und der zylindrischen Mantelfläche des Verbindungszapfens auszugleichen. Ferner wird eine Ausrichtung der zu fügenden Teile zueinander vereinfacht. Die Verbindung ist hierbei so ausgelegt, dass eine Aufweitung des Außendurchmessers des Bereiches des Fügepartners, in den der Verbindungszapfen eindringt, nahezu verhindert ist. Dabei liegen die Werte der Aufweitung des Außendurchmessers unterhalb von 0,2mm besonders bevorzugt unterhalb von 0,05mm. Dies reduziert das Materialvolumen, das entfernt werden muss, falls im Bereich der Fügestelle ein konstanter Aussendurchmesser gefordert wird. Ferner senkt dies die Rissgefahr in der Wandung des Hohlraums, so dass die Verbindungsfestigkeit gewährleistet ist. Im Fall einer nichtzylindrischen Ausbildung des Verbindungszapfens und des Hohlraums gilt dies analog. Die nur geringe Aufweitung ist in diesem Fall sogar noch wichtiger, da nichtrunde Umfangskonturen eher zu einer Kerbwirkung neigen und sich leichter Risse ausbilden können.

Im Sinne der Erfindung ist von dem Begriff "Zahnstange" auch eine Gewindestange umfasst, die zur Umformung der Drehbewegung in eine Translationsbewegung keine Verzahnung, sondern nur ein Gewinde für eine Gewindemutter, z. B. Kugelgewindemutter, oder einen Gewindetrieb, z. B. Kugelgewindetrieb, umfasst. Derartige Gewindestangen finden Anwendung bei Steer-by-wire Lenksystemen, bei denen die vom Steuerrad eingeleitete Drehbewegung mechanisch entkoppelt über eine Hilfskrafteinrichtung in eine Verschwenkung der Räder überführt wird. In der folgenden Beschreibung ist somit unter dem Begriff "Zahnstange" auch der Begriff "Gewindestange" subsummiert und unter einer Verzahnung als Funktionselement ist auch eine Ausbildung als Gewinde subsummiert.

Weitere Vorteile und Einzelheiten der Erfindung werden im Folgenden anhand der beiliegenden Zeichnung erläutert. In dieser zeigen:
- Fig. 1: ein erstes Ausführungsbeispiel einer Zahnstange gemäß der Erfindung, in Schräg- sicht;
- Fig. 2a: einen Längsmittelschnitt im Verbindungsbereich der beiden stangenförmigen Tei- le;
- Fig. 2b: einen Längsschnitt im Verbindungsbereich der beiden stangenförmigen Teile in einer alternativen Ausführungsform;
- Fig. 3: die Zahnstange von Fig. 1 vor der Verbindung der Teile;
- Fig. 4: ein weiteres Ausführungsbeispiel der Erfindung, in Schrägsicht;
- Fig. 5: die Zahnstange von Fig. 4 vor dem Zusammenpressen der Teile;
- Fig. 6 und Fig. 7: Längsmittelschnitte im Verbindungsbereich von Zahnstangen entspre- chend weiteren Ausführungsformen der Erfindung;
- die Fig. 8 bis 10: Längsmittelschnitte durch verschiedene Ausführungsformen von Verbin- dungsteilen;
- die Fig. 11 und 12: Schrägsichten von weiteren Zahnstangen gemäß der Erfindung;
- Fig. 13: eine Schrägsicht eines der beiden miteinander zu verbindenden stangenförmigen Teile (der verzahnte Bereich verkürzt dargestellt) zusammen mit einem Verbin- dungsteil, gemäß einer weiteren Ausführungsform der Erfindung.

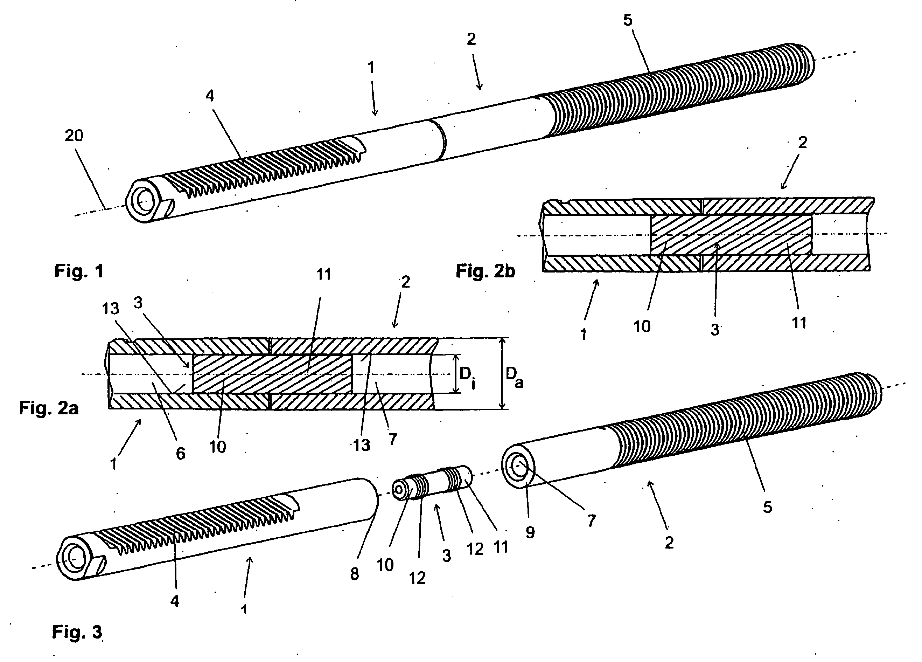

Ein erstes Ausführungsbeispiel einer Zahnstange gemäß der Erfindung, beispielsweise für den Einsatz in einer Lenkvorrichtung eines Kraftfahrzeuges, wird im Folgenden anhand der Fig. 1 bis 3 erläutert. Die Zahnstange umfasst ein erstes und ein zweites stangenförmiges Teil 1, 2, die mittels eines Verbindungsteils 3 miteinander verbunden sind. Das erste stangenförmige Teil 1 besitzt als Funktionselement die Verzahnung 4 der Zahnstange. Die Verzahnung 4 erstreckt sich über einen Teil der gesamten Längserstreckung der Zahnstange und dieser Teil der Längserstreckung der Zahnstange bildet somit einen ersten Funktionsbereich der Zahnstange.

Das zweite stangenförmige Teil besitzt als Funktionselement ein Gewinde 5, beispielsweise für einen Kugelgewindetrieb. Dieses erstreckt sich über einen Teil der gesamten Längserstreckung der Zahnstange und dieser Teil der Längserstreckung der Zahnstange stellt somit einen zweiten Funktionsbereich der Zahnstange dar, der in einem anderen Abschnitt der Längserstreckung der Zahnstange liegt als der erste Funktionsbereich.

Das erste und das zweite stangenförmige Teil 1, 2 bilden somit jeweils einen unterschiedlichen Längsabschnitt der Zahnstange.

Das zweite stangenförmige Teil 2 könnte auch eine andere Art von Funktionselement bzw. einen in anderer Weise ausgebildeten Funktionsbereich aufweisen. Beim Einsatz in einer Lenkvorrichtung eines Kraftfahrzeuges kann der Funktionsbereich des zweiten stangenförmigen Teils 2 insbesondere Teil einer hydraulischen Lenkkraftunterstützung sein.

Das erste und das zweite stangenförmige Teil 1, 2 weisen jeweils einen in axialer Richtung verlaufenden Hohlraum 6, 7 auf. Diese münden an den zueinander gerichteten Verbindungsenden 8, 9 der stangenförmigen Teile 1, 2. Im Ausführungsbeispiel gemäß den Fig. 1 bis 3 erstrecken sich diese Hohlräume 6, 7 durchgehend über die gesamten Längen der stangenförmigen Teile 1, 2, d. h. die stangenförmigen Teile 1, 2 sind als Rohre ausgebildet. Der Hohlraum 6 des ersten und/oder der Hohlraum 7 des zweiten stangenförmigen Teils 1, 2 könnten sich aber auch nur über einen Teil der axialen Länge des stangenförmigen Teils 1, 2 erstrecken.

Im miteinander verbundenen Zustand der stangenförmigen Teile 1, 2 ist in an die Verbindungsenden 8, 9 anschließenden Abschnitten der Hohlräume 6, 7 jeweils ein Abschnitt des Verbindungsteils 3 gehalten. Der im jeweiligen Hohlraum 6, 7 liegende Abschnitt des Verbindungsteils 3 stellt jeweils einen Verbindungszapfen 10, 11 dar, über welchen das Verbindungsteil 3 mit dem jeweiligen stangenförmigen Teil 1, 2 durch einen Presssitz verbunden ist. Im Ausführungsbeispiel gemäß den Fig. 1 bis 3 wird das Verbindungsteil 3 insgesamt durch diese Verbindungszapfen 10, 11 gebildet, d. h. die beiden Verbindungszapfen 10, 11 erstrecken sich ausgehend von der Stelle, an der im zusammengebauten Zustand der Zahnstange die Verbindungsenden 8, 9 der beiden stangenförmigen Teile 1, 2 liegen, axial in entgegengesetzte Richtungen.

Zwischen den beiden Verbindungszapfen 10, 11 könnten aber auch ein oder mehrere weitere Abschnitte des Verbindungsteils 3 liegen, was in der Folge noch beispielhaft beschrieben werden wird.

Die Verbindungszapfen 10, 11 des Verbindungsteils 3 werden bei dessen Herstellung mit Materialerhebungen 12 versehen, vgl. Fig. 3. Diese Materialerhebungen 12 werden beim Einpressen des jeweiligen Verbindungszapfens 10, 11 in den jeweiligen Hohlraum 6, 7 verformt, wodurch ein starker und sicherer Presssitz ausgebildet werden kann.

Beispielsweise können die Materialerhebungen 12 von Kämmen, Stegen, Zähnen, Wülsten o. dgl. gebildet werden. Im Ausführungsbeispiel gemäß den Fig. 1 bis 3 verlaufen diese Materialerhebungen in Umfangsrichtung. Hierbei können die Kämme, Stege oder Zähne einen ringförmigen Verlauf besitzen oder es kann eine Steigung nach Art eines Gewindes vorgesehen sein. Solche Materialerhebungen 12 können auch als Rollierung oder als ringförmiger Nutenrändel bezeichnet werden.

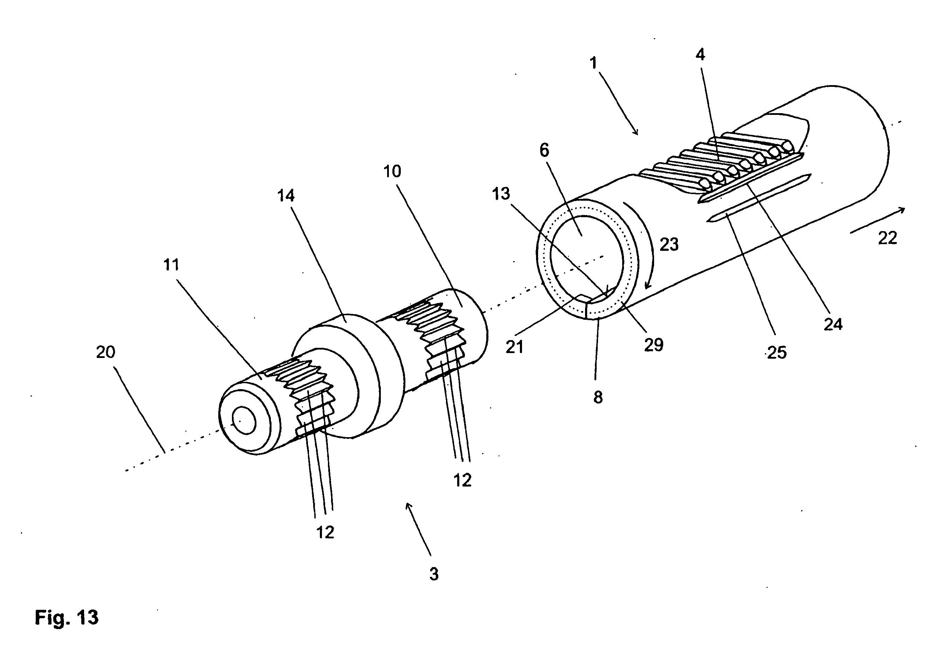

Die von den Wülsten, Stegen, Zähnen o. dgl. ausgebildeten Materialerhebungen 12 können auch eine andere Form aufweisen, beispielsweise in axialer Richtung verlaufen, wie es in Fig. 13 angedeutet ist. Derartige axial verlaufende Materialerhebungen werden auch als axiales Nutenrändel bezeichnet. Auch in eine schräge Richtung verlaufende Stege, Wülste oder Zähne oder andere Arten von Materialerhebungen, beispielsweise Diamanträndel, könnten vorgesehen sein.

Die Materialerhebungen 12 können vorzugsweise durch Materialverdrängung ausgebildet werden, insbesondere mittels rollender Werkzeuge, wie sie auch zum Herstellen von gerollten Gewinden dienen.

Zusätzlich zu den Materialerhebungen 12 der Verbindungszapfen 10, 11 oder statt dessen kann die den jeweiligen Hohlraum 6, 7 begrenzende Wand 13, zumindest in dem Abschnitt, in welchem die Pressverbindung mit dem Verbindungszapfen 10, 11 erfolgt, mit Materialerhebungen versehen sein. Diese Materialerhebungen können die bereits im Zusammenhang mit den Verbindungszapfen 10, 11 beschriebenen Formen aufweisen. Eine bevorzugte Ausführungsform von solchen Materialerhebungen an der Wand 13 des jeweiligen Hohlraums 6, 7 sind hierbei in axialer Richtung verlaufende Zähne. Solche Zähne können beim Einpressen des zugehörigen Verbindungszapfens 10, 11 Vertiefungen in diesem bzw. in dessen Materialerhebungen ausformen. Durch diese Vertiefungen kann eine gegen eine relative Verdrehung des Verbindungszapfens 10, 11 gegenüber der Wand 13 formschlüssig wirkende Verbindung ausgebildet werden. Vorzugsweise werden solche Vertiefungen beim Einpressen des Verbindungszapfens 10, 11 nicht oder nur zu einem geringen Grad spanabhebend, sondern ganz oder überwiegend durch Materialverdrängung gebildet.

Bei der erfindungsgemäßen Ausbildung, bei der die Materialerhebungen durch Umformung ausgebildet werden, ist der Außendurchmesser d des zylindrischen Verbindungszapfens dabei etwas kleiner als der Innendurchmesser Dᵢ des zylindrischen Hohlraums, so dass ohne die umlaufenden Materialerhebungen, der Verbindungszapfen mit etwas Spiel in den Hohlraum eingeschoben werden kann. Erst durch die Materialerhebungen am Verbindungszapfen, deren äußerer Umfang einen Durchmesser d+2x beschreiben, wird das für den Presssitz erforderliche Übermaß erreicht. Alternativ oder auch in Kombination gilt dies für die Materialerhebungen entlang des Innendurchmessers des Hohlraums. Das Übermaß wird dabei bevorzugt mit einer Größe im Bereich von 0,05mm bis 0,25mm dimensioniert, besonders bevorzugt etwa bei 0,1-0,15mm.

Der Presssitz wird derart ausgelegt, dass der Außendurchmesser Dₐ des stangenförmigen Teils sich nicht um mehr als 0,2mm, bevorzugt weniger als 0,1 mm expandiert.

Analoges gilt auch für nichtzylindrische Querschnitte des Verbindungszapfens. In diesem Fall sind als Durchmesser der doppelte Abstand des Aussenabschnitts im jeweiligen Winkelabschnitt von der Längsachse angesetzt, wie es bei der Verwendung von Polarkoordinaten üblich ist.

Durch den Presssitz der Verbindungszapfen 10, 11 in den Hohlräumen 6, 7 wird eine kraftschlüssig wirkende Verbindung ausgebildet. Die Rückfederung bewirkt zusätzlich eine in axiale Richtung formschlüssig wirkende Komponente der Verbindung, beispielsweise durch Entspannung eines Abschnitts einer in Längsrichtung verlaufenden Materialerhebung an der Wand 13, welcher Abschnitt bezogen auf die Einschubrichtung hinter einer in Umfangsrichtung verlaufenden Materialerhebung 12 des Verbindungszapfens 10, 11 liegt.

Die Verbindung des jeweiligen stangenförmigen Teils 1, 2 mit dem Verbindungsteil 3 erfolgt in einfacher Weise durch axiales Zusammenpressen. Hierbei kann ein Verbindungszapfen 10, 11 des Verbindungsteils 3 zunächst in eines der stangenförmigen Teile 1, 2 und danach der andere Verbindungszapfen 10, 11 in das andere stangenförmige Teil 1, 2 eingepresst werden. Um beim zweiten Einpressvorgang nicht den bereits beim ersten Einpressvorgang eingepressten Verbindungszapfen 10, 11 tiefer in den Hohlraum 6, 7 einzupressen, können unterschiedliche Maßnahmen vorgesehen sein. Beispielsweise kann der Hohlraum 6, 7 ein Verjüngung seines Durchmesser aufweisen, um die Einpresstiefe des Verbindungsteils 3 zu begrenzen. Eine andere Möglichkeit besteht darin, die Verbindungszapfen 10, 11 unterschiedlich lang und mit unterschiedlichen Längen der Pressverbindung im eingepressten Zustand auszubilden, wie es in der Fig. 2b veranschaulicht ist. Zuerst wird der Verbindungszapfen mit der größeren Einpresslänge eingepresst. Wenn in der Folge der andere Verbindungszapfen eingepresst wird, so kann die hierbei auftretende Kraft vom bereits eingepressten Verbindungszapfen ohne eine Zunahme der Einpresstiefe desselben aufgenommen werden.

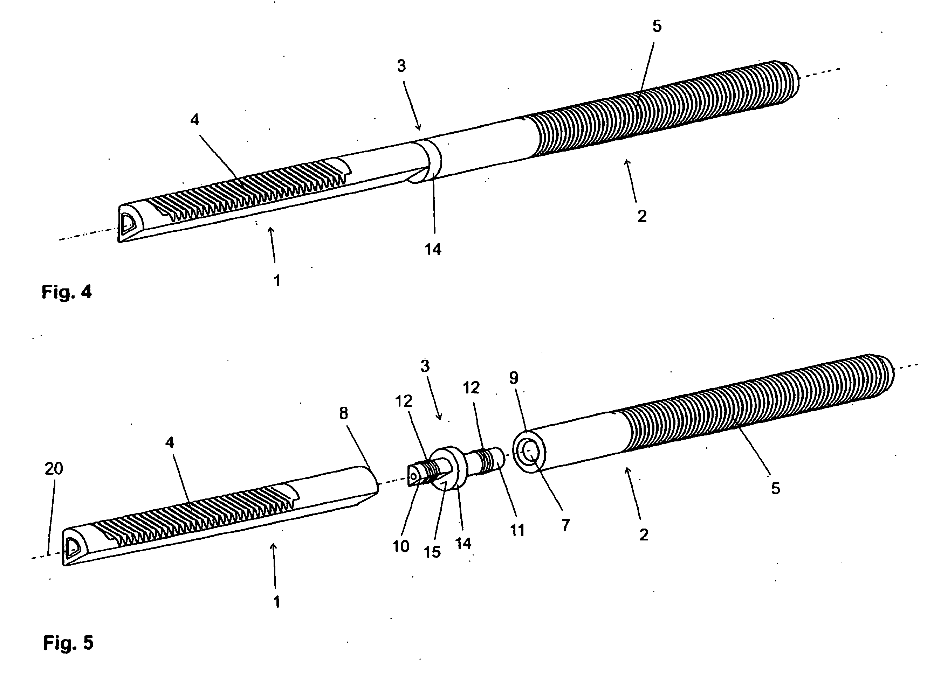

Eine weitere Möglichkeit ist im Ausführungsbeispiel gemäß den Fig. 4 und 5 dargestellt. Hier besitzt das Verbindungsteil 3 einen Bund 14, wobei die Verbindungszapfen 10, 11 vom den Bund 14 aufweisenden Abschnitt des Verbindungsteils 3 in entgegengesetzte Richtungen koaxial abstehen. Im zusammengepressten Zustand liegen in axialer Richtung ausgerichtete Anlageflächen 15 des Bundes 14 am ersten und zweiten stangenförmigen Teil 1, 2 stirnseitig an. Im zusammengebauten Zustand bildet die Außenfläche des Bundes 14 einen Abschnitt der Außenfläche der Zahnstange, die bündig zu den an die Verbindungsenden 8, 9 anschließenden Außenflächen der stangenförmigen Teile 1, 2 liegt. Die Außenfläche des Bundes 14 kann auch einen kleineren Durchmesser als diejenige der stangenförmigen Teile 1, 2 in ihren an die Verbindungsenden 8, 9 anschließenden Abschnitten aufweisen und der Bund 14 kann im verbundenen Zustand der Teile 1, 2, 3 in stirnseitigen Vertiefungen der stangenförmigen Teile 1, 2 aufgenommen sein.

Die Erfindung ermöglicht auch die Herstellung von Zahnstangen mit nichtzylindrischen Querschnittsflächen. Dies ist in den Figuren 4 und 5 veranschaulicht. Dabei ist es sowohl möglich, stangenförmige Teile 1, 2 mit unterschiedlichen Querschnitten, als auch stangenförmige Teile 1, 2 mit im Wesentlichen gleichen Querschnitten zu verbinden. Dadurch ist es möglich, jeden Längsabschnitt der Zahnstange in einfacher Weise mit dem für die jeweilige Anwendung optimalen Querschnitt auszulegen und herzustellen und im Anschluss die Einzelteile zu einer vollständigen Zahnstange zusammen zu fügen. Je nach Dimensionierung kann dabei sowohl ein im Wesentlichen zylindrischer Verbindungszapfen 10, im Zusammenwirken mit einem im Wesentlichen zylindrischen oder aber auch im Zusammenwirken mit einem an die Außenform angepassten Hohlraum 6, als auch ein der Außenform angepasster Verbindungszapfen 10 zur Verbindung dienen.

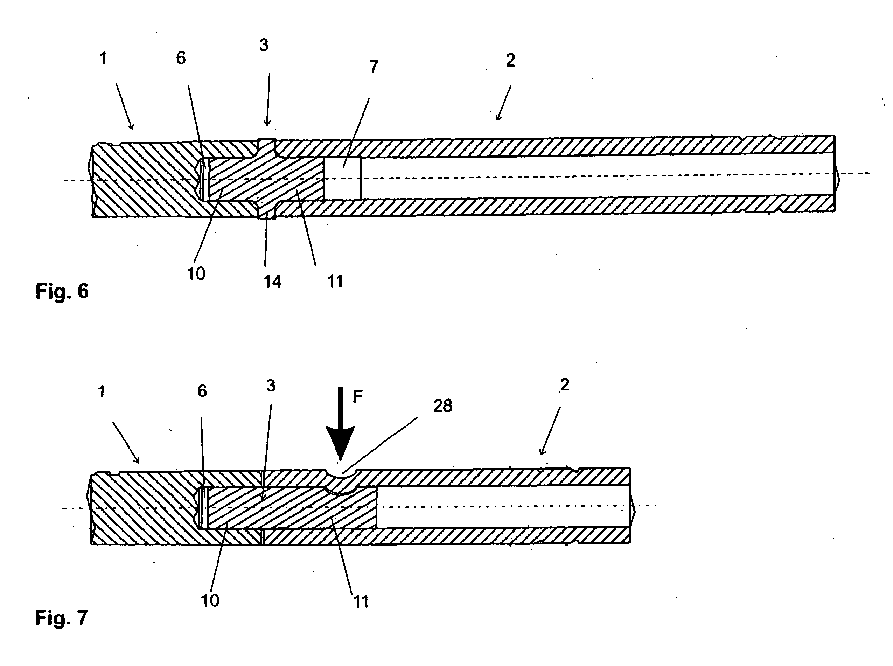

Der Hohlraum 6, 7 des ersten und/oder zweiten stangenförmigen Teils 1, 2 kann auch nicht durchgehend über die Länge des stangenförmigen Teils 1, 2 ausgebildet sein. Ein solches Ausführungsbeispiel ist in Fig. 6 dargestellt. Der Hohlraum 6 des ersten stangenförmigen Teils 1 ist hier in Form eines vom Verbindungsende 8 stirnseitig ausgehenden Sacklochs ausgebildet. Statt dessen oder zusätzlich kann eine solche Ausbildung auch für das zweite stangenförmige Teil 2 vorgesehen sein.

In Fig. 7 ist ein Ausführungsbeispiel dargestellt, bei dem zur zusätzlichen Sicherung der Pressverbindung des Verbindungszapfens 11 mit dem zweiten stangenförmigen Teil 2 das zweite stangenförmige Teil 2 nach dem Einpressen des Verbindungszapfens 11 im Verbindungsbereich mit dem Verbindungszapfen 11 radial eingedrückt wird. Eine von einem entsprechenden Werkzeug ausgeübte Kraft F ist durch einen Pfeil dargestellt. Durch diese Eindrückung 28 wird der entsprechende Abschnitt des den Hohlraum 7 umgebenden Mantels in eine Vertiefung des Verbindungszapfens 11 eingedrückt bzw. verstemmt. Statt dessen oder zusätzlich könnte auch der Verbindungszapfen 10 im Hohlraum 6 des ersten stangenförmigen Teils 1 in dieser Weise zusätzlich gesichert sein.

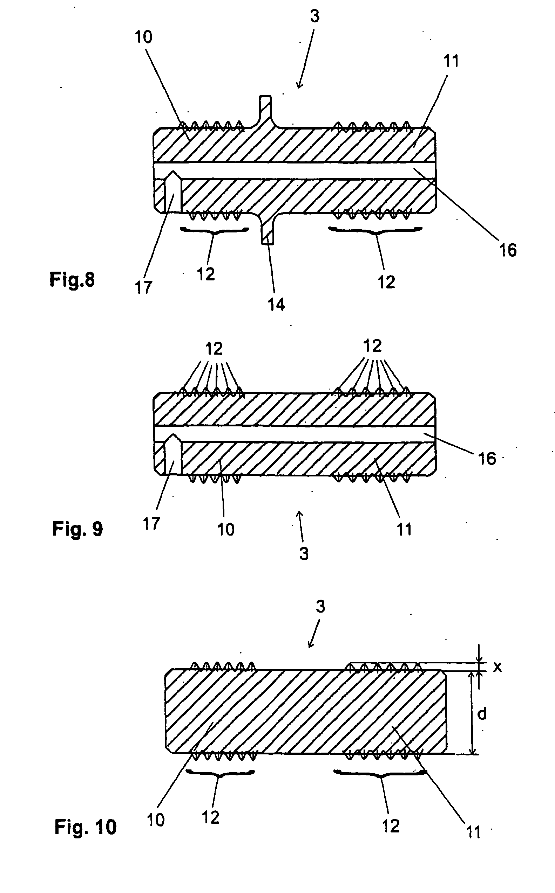

In den Fig. 8 bis 10 sind Beispiele für mögliche Ausführungsformen für das Verbindungsteil 3 dargestellt. Im Ausführungsbeispiel gemäß Fig. 8 ist zwischen den beiden Verbindungszapfen 10, 11 ähnlich wie beim in den Fig. 4 bis 5 bzw. wie beim in Fig. 6 dargestellten Ausführungsbeispiel ein nach außen abstehender Bund 14 vorhanden. Das Verbindungsteil 3 besitzt einen über seine Länge durchgehenden, an den stirnseitigen Enden seiner beiden Verbindungszapfen 10, 11 mündenden inneren Kanal 16. Weiters kann wie dargestellt beispielsweise mindestens eine Radialbohrung 17 vorhanden sein, die vom inneren Kanal 16 bis zur Mantelfläche eines Verbindungszapfens 10, 11 verläuft.

Die in Fig. 9 dargestellte Ausführungsform entspricht der Ausführungsform von Fig. 8, wobei aber kein Bund 14 vorhanden ist.

In Fig. 10 ist eine weitere Ausführungsform dargestellt, die derjenigen von Fig. 9 entspricht, wobei aber kein innerer Kanal vorhanden ist.

Unterschiedliche weitere Ausführungsformen von Verbindungsteilen 3 mit in entgegengesetzte Richtungen sich axial erstreckenden Verbindungszapfen 10, 11 sind denkbar und möglich.

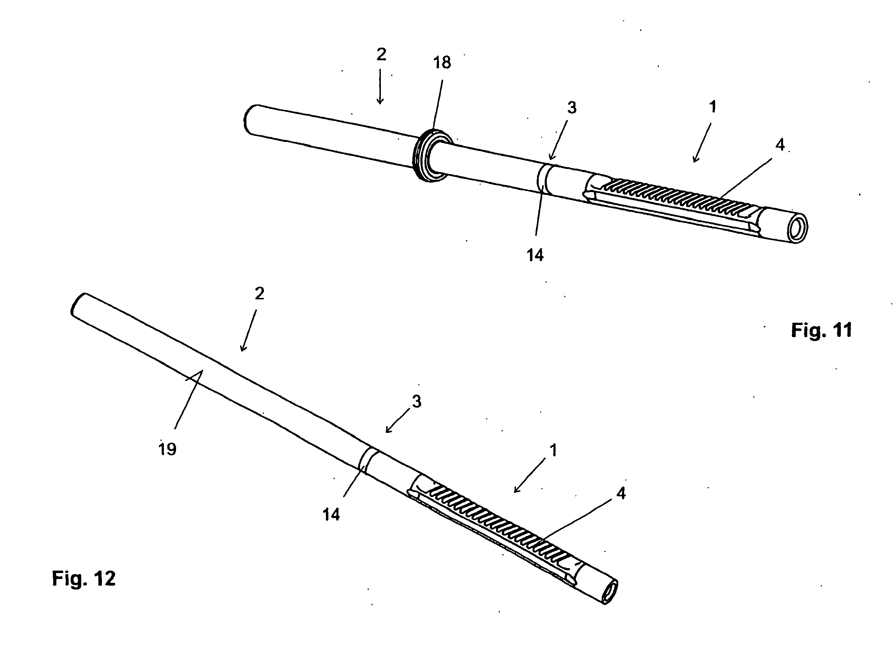

Beim in Fig. 11 dargestellten Ausführungsbeispiel weist das erste stangenförmige Teil 1 wie bereits zuvor beschrieben eine Verzahnung 4 als Funktionselement auf. Das zweite stangenförmige Teil 2 ist hier mit einem Kolben 18 als Funktionselement versehen. Dieser Kolben 18 kann in einem Zylinder angeordnet werden (nicht dargestellt), insbesondere um bei einer Lenkvorrichtung eine Servofunktion zu erfüllen. Das erste und das zweite stangenförmige Teil 1, 2 sind in der bereits beschriebenen Weise durch ein separat gefertigtes Verbindungsteil 3 verbunden, welches hier einen Bund 14 aufweist, aber auch in einer anderen bereits beschriebenen Weise ausgebildet sein kann.

Das in Fig. 12 dargestellte Ausführungsbeispiel unterscheidet sich von dem in Fig. 11 dargestellten Ausführungsbeispiel dadurch, dass das zweite stangenförmige Teil 2 als Funktionselement eine äußere Führungsfläche 19 aufweist, welche in Verbindung mit einem nicht dargestellten Führungsteil zur Ausbildung einer axialen Führung der Zahnstange dient.

Weiters kann in allen gezeigten Ausführungsbeispielen am vom ersten stangenförmigen Teil 1 abgelegenen Ende des zweiten stangenförmigen Teils 2 als Funktionselement ein Verbindungselement zur Verbindung mit einem von der Zahnstange betätigten Teil angebracht sein. Dieses Funktionselement kann auch das einzige Funktionselement des zweiten stangenförmigen Teils 2 sein.

Das zweite stangenförmige Teil 2 kann am vom ersten stangenförmigen Teil 1 abgelegenen Ende auch mit einem weiteren stangenförmigen Teil verbunden sein, insbesondere durch eine der Verbindung zwischen dem ersten und dem zweiten stangenförmigen Teil 1, 2 entsprechende Verbindung. Hierbei kann die einzige Funktion des zweiten stangenförmigen Teils 2 auch die Verbindungsfunktion mit diesem weiteren stangenförmigen Teil sein, welcher ein weiteres Funktionselement aufweisen kann.

An dem vom zweiten stangenförmigen Teil abgelegenen Ende des ersten stangenförmigen Teils 1 kann dieses mit einem oder mehreren weiteren stangenförmigen Teilen verbunden sein, insbesondere durch eine der Verbindung zwischen dem ersten und dem zweiten stangenförmigen Teil 1, 2 entsprechende Verbindung. Mindestens eines dieser weiteren stangenförmigen Teile kann ein weiteres Funktionselement aufweisen.

Auf diese Weise kann aus mehr als zwei Einzelteilen, die separat hergestellt sind, mit dem erfindungsgemäßen Verfahren eine Zahnstange gebildet werden.

Das in Fig. 13 dargestellte Ausführungsbeispiel soll zunächst eine weitere mögliche Ausbildung für die Materialerhebungen 12 an den Verbindungszapfen 10, 11 verdeutlichen.

Diese werden hier von in axialer Richtung verlaufenden Zähnen gebildet, wobei diese Zähne den jeweiligen Verbindungszapfen 10, 11 insgesamt ringförmig umgeben. Anstelle von Zähnen könnten beispielsweise auch Stege bzw. Wülste vorhanden sein. Solche in axialer Richtung verlaufende Materialerhebungen könnten auch bei den Verbindungszapfen der zuvor beschriebenen Ausführungsbeispiele eingesetzt werden. Andererseits könnten die Materialerhebungen 12 des in Fig. 13 dargestellten Ausführungsbeispiels auch in anderer Weise ausgebildet sein.

Das in Fig. 13 dargestellte erste stangenförmige Teil 1 ist durch Umformung aus einem ebenen Blech ausgebildet. Das Blech ist rohrförmig gebogen und umgibt die Längsachse 20. Die miteinander in Anlage kommenden Ränder des Blechs können durch eine Schweißnaht 21 miteinander verbunden sein. Auf die Außenseite des ersten stangenförmigen Teils 1 ist die Verzahnung 4 aufgeprägt. Diese Aufprägung kann im noch ebenen Zustand oder bereits teilweise gebogenen Zustand des Blechs erfolgen. Um bei einer der Aufprägung der Verzahnung nachfolgenden weiteren Umformung des Blechs die Form der bereits geprägten Verzahnung möglichst wenig zu beeinflussen, ist bevorzugter Weise in der Umfangsrichtung 23 gesehen vor und hinter der Verzahnung 4 mindestens eine Schwächung 24, 25 eingebracht, die sich bezogen auf die Längsrichtung 22 der Zahnstange 1 zumindest über einen Teil der Länge der Verzahnung 4 neben dieser erstreckt. Im gezeigten Ausführungsbeispiel sind auf beiden Seiten der Verzahnung 4 zwei linienförmige Schwächungen 24, 25 in unterschiedlichen Abständen zur Verzahnung 4 angeordnet, die sich über die gesamte Längserstreckung der Verzahnung 4 neben dieser erstrecken.

Durch die mindestens eine auf der Seite der Verzahnung 4 verlaufende linienförmige Schwächung 24, 25 kann die durch nachfolgende Umformschritte in das Blech eingebrachte Spannungsverteilung beeinflusst werden. So werden beispielsweise Biegespannungen über quer zur Biegelinie 29 verlaufende Schwächungen, beispielsweise Sicken oder auch Einfräsungen, nur in geringem Umfang übertragen. Zumindest der Großteil der Spannung wird durch eine Verformung an der Schwächungsstelle abgebaut. Werden durch die Ausbildung der Schwächungen Absätze oder Kanten in das Werkstück eingebracht, so kann der Werkstofffluss bei einer nachfolgenden Umformung durch eine Anlage dieser Absätze oder Kanten am Werkzeug stark vermindert werden. Die Schwächungen bilden in diesem Fall also gleichzeitig auch Haltekanten für das Umformwerkzeug aus. Denkbar und möglich wäre es beispielsweise auch, Haltekanten auszubilden, die nicht gleichzeitig auch eine Schwächung darstellen. Auch in diesem Fall wird der Stofffluss durch den Kontakt mit dem Werkzeug behindert.

Durch solche Schwächungen 24, 25 und/oder Haltekanten, die einen Teilbereich des Blechs bezogen auf die Richtung der Biegelinie 29 des Blechstücks bei einer nachfolgenden Biegeoperation abgrenzen, können Formänderungen durch diese nachträgliche Biegeoperation somit wesentlich verringert werden, wodurch weniger oder keine Nachbehandlungsschritte der eingebrachten Verzahnung 4 nach Abschluss des Biegevorgangs des ersten stangenförmigen Teils 1 erforderlich sind.

Alternativ zur Ausbildung des stangenförmigen Teils 1 mit einer im Wesentlichen zylindrischen Aussenfläche, kann das vorgängig beschriebene Verfahren auch für die Ausbildung anderer Querschnittsformen, wie beispielsweise in der Fig. 4 dargestellt, angewendet werden.

Vorzugsweise weist jeder der einen Verbindungszapfen 10, 11 aufnehmenden Hohlräume 6, 7 anschließend an das Verbindungsende 8, 9 eine trichterförmige Erweiterung auf, um das Einpressen eines Verbindungszapfens zu erleichtern. Zusätzlich oder statt dessen kann ein jeweiliger Verbindungszapfen 10, 11 zu seinem Ende hin eine Verjüngung aufweisen.

### Legende

### zu den Hinweisziffern:

- 1: erstes stangenförmiges Teil
- 2: zweites stangenförmiges Teil
- 3: Verbindungsteil
- 4: Verzahnung
- 5: Gewinde
- 6: Hohlraum
- 7: Hohlraum
- 8: Verbindungsende
- 9: Verbindungsende
- 10: Verbindungszapfen
- 11: Verbindungszapfen
- 12: Materialerhebung
- 13: Wand
- 14: Bund
- 15: Anlagefläche
- 16: Kanal
- 17: Radialbohrung
- 18: Kolben
- 19: Führungsfläche
- 20: Längsachse
- 21: Schweißnaht
- 22: Längsrichtung
- 23: Umfangsrichtung
- 24: Schwächung
- 25: Schwächung
- 28: Eindrückung
- 29: Biegelinie
- d: Außendurchmesser
- Dᵢ: Innendurchmesser
- Dₐ: Außendurchmesser
- x: Abstand

## Patentansprüche

1. Zahnstange oder Gewindestange für eine Lenkvorrichtung für ein Kraftfahrzeug, welche ein erstes stangenförmiges Teil (1), das als Funktionselement der Zahnstange oder Gewindestange mindestens ein Element zur Umwandlung einer Rotations- in eine Translationsbewegung, insbesondere eine Verzahnung (4) und/oder ein Gewinde für den Eingriff einer Gewindemutter oder eines Gewindetriebs, aufweist, und ein zweites stangenförmiges Teil (2) umfasst, das mit dem ersten stangenförmigen Teil (1) verbunden ist und das vorzugsweise mindestens ein weiteres Funktionselement der Zahnstange oder Gewindestange aufweist, wobei zumindest eines der stangenförmigen Teile (1, 2) einen an einem Verbindungsende des stangenförmigen Teils (1,2) mündenden Hohlraum (6, 7) aufweist, in dem für die Verbindung mit dem anderen stangenförmigen Teil (1, 2) ein Verbindungszapfen (10, 11) durch einen Presssitz gehalten ist, **dadurch gekennzeichnet, dass** die Verbindung des ersten mit dem zweiten stangenförmigen Teil (1, 2) über ein separates Verbindungsteil (3) erfolgt, welches erste und zweite Verbindungszapfen (10, 11) aufweist, dass der erste Verbindungszapfen (10) im am Verbindungsende (8) mündenden Hohlraum (6) des ersten stangenförmigen Teils (1) und der zweite Verbindungszapfen (11) im am Verbindungsende (9) mündenden Hohlraum (7) des zweiten stangenförmigen Teils (2) jeweils durch einen Presssitz gehalten ist, wobei das Verbindungsteil (3) die beiden stangenförmigen Teile (1, 2) durch die Presssitze miteinander verbindet, dass ein jeweiliger im Hohlraum (6, 7) des jeweiligen stangenförmigen Teils (1, 2) angeordneter Verbindungszapfen (10, 11) im Bereich des Presssitzes mit durch Umformung gebildeten Materialerhebungen (12) versehen ist und dass die Verbindung so ausgelegt ist, dass die Materialerhebungen (12) das für einen Presssitz erforderliche Übermaß des äußeren Durchmessers des Verbindungszapfens (10, 11) gegenüber dem Innendurchmesser des Hohlraums (6, 7) bilden, in welchem der Verbindungszapfen (10, 11) gehalten ist, und die Aufweitung des Außendurchmessers des jeweiligen stangenförmigen Teils (1, 2) beim Einpressen des jeweiligen Verbindungszapfens (10, 11) in den Hohlraum (6, 7) des stangenförmigen Teils (1, 2) unterhalb von 0,2mm liegt.

2. Zahnstange oder Gewindestange nach Anspruch 1, **dadurch gekennzeichnet, dass** die durch Umformung ausgebildeten Materialerhebungen (12) als in Umfangsrichtung umlaufende Stege, Wülste oder Zähne ausgebildet sind.

3. Zahnstange oder Gewindestange nach Anspruch 1 oder 2, **dadurch gekennzeichnet, dass** die Länge, über die der erste Verbindungszapfen (10) mit dem ersten stangenförmigen Teil (1) über den Presssitz verbunden ist, größer ist als die Länge, über die der zweite Verbindungszapfen (11) mit dem zweiten stangenförmigen Teil (2) über den Presssitz verbunden ist.

4. Zahnstange oder Gewindestange nach einem der Ansprüche 1 bis 3, **dadurch gekennzeichnet, dass** das Verbindungsteil (3) zwischen dem ersten und dem zweiten Verbindungszapfen (10, 11) einen Bund (14) aufweist, der Anlageflächen (15) zur Anlage an stirnseitigen Flächen des ersten und zweiten stangenförmigen Teils (1, 2) aufweist.

5. Zahnstange oder Gewindestange nach einem der vorhergehenden Ansprüche , **dadurch gekennzeichnet, dass** mindestens ein einen Verbindungszapfen (10, 11) aufnehmender Hohlraum (6, 7), vorzugsweise jeder der einen Verbindungszapfen (10, 11) aufnehmenden Hohlräume (6, 7), zum Verbindungsende (8, 9) hin eine trichterförmige Erweiterung aufweist.

6. Zahnstange oder Gewindestange nach einem der vorhergehenden Ansprüche , **dadurch gekennzeichnet, dass** das erste und/oder zweite stangenförmige Teil (1, 2) zur Sicherung der Verbindung mit dem Verbindungszapfen (10, 11) mit einer Eindrückung (28) versehen ist, die in eine Vertiefung im Verbindungszapfen (10, 11) eingreift.

7. Zahnstange oder Gewindestange nach einem der vorhergehenden Ansprüche , **dadurch gekennzeichnet, dass** der Hohlraum (6, 7) des ersten und/oder des zweiten stangenförmigen Teils (1, 2) sich zumindest über den Großteil der Länge, vorzugsweise die gesamte Länge, des stangenförmigen Teils (1, 2) erstreckt.

8. Zahnstange oder Gewindestange nach einem der vorhergehenden Ansprüche , **dadurch gekennzeichnet, dass** das Verbindungsteil (3) einen inneren Kanal (16) aufweist.

9. Zahnstange oder Gewindestange nach einem der vorhergehenden Ansprüche , **dadurch gekennzeichnet, dass** das Verbindungsteil (3) gerade ausgebildet ist und die Verbindungszapfen (10, 11) sich in entgegengesetzte Richtungen axial erstrecken.

10. Zahnstange oder Gewindestange nach einem der vorhergehenden Ansprüche, **dadurch gekennzeichnet, dass** mindestens ein einen Verbindungszapfen (10, 11) aufnehmender Hohlraum (6, 7), vorzugsweise jeder der einen Verbindungszapfen (10, 11) aufweisenden Hohlräume (6, 7), in einem Abschnitt seiner Längserstreckung, in dem der Presssitz ausgebildet ist, an seiner Wand (13) Materialerhebungen aufweist.

11. Zahnstange oder Gewindestange nach Anspruch 10, **dadurch gekennzeichnet, dass** die Materialerhebungen als in axialer Richtung verlaufende Stege, Wülste oder Zähne ausgebildet sind.

12. Lenkvorrichtung für ein Kraftfahrzeug mit einer Zahnstange oder Gewindestange nach einem der Ansprüche 1 bis 11.

13. Verfahren zur Herstellung einer Zahnstange oder Gewindestange für eine Lenkvorrichtung für ein Kraftfahrzeug, welche ein erstes stangenförmiges Teil (1), das als Funktionselement der Zahnstange oder Gewindestange mindestens ein Element zur Umwandlung einer Rotations- in eine Translationsbewegung, insbesondere eine Verzahnung (4) und/oder ein Gewinde für den Eingriff einer Gewindemutter oder eines Gewindetriebs, aufweist, und ein zweites stangenförmiges Teil (2) umfasst, das mit dem ersten stangenförmigen Teil (1) verbunden ist und das vorzugsweise mindestens ein weiteres Funktionselement der Zahnstange oder Gewindestange aufweist, wobei zumindest eines der stangenförmigen Teile (1, 2) einen an einem Verbindungsende des stangenförmigen Teils (1,2) mündenden Hohlraum (6, 7) aufweist, in dem für die Verbindung mit dem anderen stangenförmigen Teil (1, 2) ein Verbindungszapfen (10, 11) unter Einsatz eines Presssitzes festgelegt wird, **dadurch gekennzeichnet, dass** die Verbindung des ersten mit dem zweiten stangenförmigen Teil (1, 2) über ein separates Verbindungsteil (3) durchgeführt wird, welches erste und zweite Verbindungszapfen (10, 11) aufweist, die jeweils im Bereich eines mit dem jeweiligen stangenförmigen Teil (1, 2) auszubildenden Presssitzes mit durch Umformung gebildeten Materialerhebungen (12) versehen werden, deren Höhen im Bereich von 0,03mm bis 0,4mm liegen, dass der erste Verbindungszapfen (10) in den am Verbindungsende (8) mündenden Hohlraum (6) des ersten stangenförmigen Teils (1) und der zweite Verbindungszapfen (11) in den am Verbindungsende (9) mündenden Hohlraum (7) des zweiten stangenförmigen Teils (2) jeweils eingepresst wird, wobei das Verbindungsteil (3) die beiden stangenförmigen Teile (1, 2) durch die so hergestellten Presssitze miteinander verbindet, und dass die Verbindung so ausgelegt wird, dass durch die Ausbildung der Materialerhebungen (12) das für einen Presssitz erforderliche Übermaß des äußeren Durchmessers des Verbindungszapfens (10, 11) gegenüber dem Innendurchmesser des Hohlraums (6, 7) gebildet wird, in welchen der Verbindungszapfen (10, 11) eingepresst wird, und die Aufweitung des Außendurchmessers des jeweiligen stangenförmigen Teils (1, 2) beim Einpressen des jeweiligen Verbindungszapfens (10, 11) in den Hohlraum (6, 7) des jeweiligen stangenförmigen Teils (1, 2) unterhalb von 0,2mm liegt.

## Claims

1. A gear rack or threaded rod for a steering device for a motor vehicle, which comprises a first rod-shaped part (1) having, as a functional element of the gear rack or threaded rod, at least one element to convert a rotary motion into a translatory motion, in particular toothing (4) and/or a thread for engagement of a threaded nut or a threaded drive, and a second rod-shaped part (2) connected to the first rod-shaped part (1) and preferably having at least another functional element of the gear rack or threaded rod, wherein at least one of the rod-shaped parts (1, 2) has a cavity (6, 7), issuing at a connection end of the rod-shaped part (1, 2), in which, for the connection to the other rod-shaped part (1, 2), a connection peg (10, 11) is held by a force fit, **characterised in that** the connection of the first to the second rod-shaped part (1, 2) takes place via a separate connection part (3) having first and second connection pegs (10, 11), **in that** the first connection peg (10) is held by a force fit in the cavity (6), issuing at the connection end (8), of the first rod-shaped part (1) and the second connection peg (11) is held by a force fit in the cavity (7), issuing at the connection end (9), of the second rod-shaped part (2), wherein the connection part (3) connects the two rod-shaped parts (1, 2) to one another by the force fits, **in that** a respective connection peg (10, 11) arranged in the cavity (6, 7) of the respective rod-shaped part (1, 2) is provided with material elevations (12), formed by deformation, in the region of the force fit, and **in that** the connection is designed in such a manner that the material elevations (12) form the oversize, required for a force fit, of the outer diameter of the connection peg (10, 11) with respect to the inner diameter of the cavity (6, 7) in which the connection peg (10, 11) is held, and the expansion of the outer diameter of the respective rod-shaped part (1, 2) upon forcing of the respective connection peg (10, 11) into the cavity (6, 7) of the rod-shaped part (1, 2) lies below 0.2 mm.

2. A gear rack or threaded rod according to claim 1, **characterised in that** the material elevations formed by deformation are in the form of flanges, swellings or teeth encircling in the circumferential direction.

3. A gear rack or threaded rod according to claim 1 or 2, **characterised in that** the length over which the first connection peg (10) is connected to the first rod-shaped part (1) via the force fit is greater than the length over which the second connection peg (11) is connected to the second rod-shaped part (2) via the force fit.

4. A gear rack or threaded rod according to any one of claims 1 to 3, **characterised in that** the connection part (3) has a collar (14) between the first and the second connection peg (10, 11), which collar has contact surfaces (15) for bearing against end-face surfaces of the first and second rod-shaped part (1, 2).

5. A gear rack or threaded rod according to any one of the preceding claims, **characterised in that** at least one cavity (6, 7) receiving a connection peg (10, 11), preferably each of the cavities (6, 7) receiving a connection peg (10, 11), has a funnel shaped widening towards the connection end (8, 9).

6. A gear rack or threaded rod according to any one of the preceding claims, **characterised in that** the first and/or second rod-shaped part (1, 2) is provided with an indentation (28) for assuring the connection to the connection peg (10, 11), which indentation engages a depression in the connection peg (10, 11).

7. A gear rack or threaded rod according to any one of the preceding claims, **characterised in that** the cavity (6, 7) of the first and/or the second rod-shaped part (1, 2) extends over at least the majority of the length, preferably the entire length, of the rod-shaped part (1, 2).

8. A gear rack or threaded rod according to any one of the preceding claims, **characterised in that** the connection part (3) has an inner channel (16).

9. A gear rack or threaded rod according to any one of the preceding claims, **characterised in that** the connection part (3) is straight and the connection pegs (10, 11) extend axially in opposite directions.

10. A gear rack or threaded rod according to any one of the preceding claims, **characterised in that** at least one cavity (6, 7) receiving a connection peg (10, 11), preferably each of the cavities (6, 7) having a connection peg (10, 11), has material elevations on its wall (13), in a portion of its longitudinal extension in which the force fit is formed.

11. A gear rack or threaded rod according to claim 10, **characterised in that** the material elevations are in the form of flanges, swellings or teeth running in an axial direction.

12. A steering device for a motor vehicle, having a gear rack or threaded rod according to any one of claims 1 to 11.

13. A method of producing a gear rack or threaded rod for a steering device for a motor vehicle, which comprises a first rod-shaped part (1) having, as a functional element of the gear rack or threaded rod, at least one element to convert a rotary motion into a translatory motion, in particular toothing (4) and/or a thread for engagement of a threaded nut or a threaded drive, and a second rod-shaped part (2) connected to the first rod-shaped part (1) and preferably having at least another functional element of the gear rack or threaded rod, wherein at least one of the rod-shaped parts (1, 2) has a cavity (6, 7), issuing at a connection end of the rod-shaped part (1, 2), in which, for the connection to the other rod-shaped part (1, 2), a connection peg (10, 11) is secured in position using a force fit, **characterised in that** the connection of the first to the second rod-shaped part (1, 2) is carried out via a separate connection part (3) having first and second connection pegs (10, 11) each provided in the region of a force fit to be formed with the respective rod-shaped part (1, 2) with material elevations, formed by deformation, whose heights lie in the range from 0.03 mm to 0.4 mm, **in that** the first connection peg (10) is forced into the cavity (6), issuing at the connection end (8), of the first rod-shaped part (1) and the second connection peg (11) is forced into the cavity (7), issuing at the connection end (9), of the second rod-shaped part (2), wherein the connection part (3) connects the two rod-shaped parts (1, 2) to one another by the force fits produced in this manner, and **in that** the connection is designed in such a manner that through the construction of the material elevations (12) there is formed the oversize, required for a force fit, of the outer diameter of the connection peg (10, 11) with respect to the inner diameter of the cavity (6, 7) into which the connection peg (10, 11) is forced, and the expansion of the outer diameter of the respective rod-shaped part (1, 2) upon forcing of the respective connection peg (10, 11) into the cavity (6, 7) of the respective rod-shaped part (1, 2) lies below 0.2 mm.

## Revendications

1. Crémaillère ou tige filetée de dispositif de direction de véhicule automobile comportant :
- une première pièce en forme de barre (1), ayant comme élément fonctionnel de la crémaillère ou de la tige filetée, au moins un élément pour transformer un mouvement de rotation en un mouvement de translation, notamment une denture (4) et/ou un filetage pour la prise d'un écrou ou d'un entraînement à denture, et
- une seconde pièce (2) en forme de barre, reliée à la première pièce en forme de barre (1) et comportant, de préférence, au moins un autre élément fonctionnel de la crémaillère ou de la tige filetée,
- au moins l'une des pièces en forme de barre (1, 2) ayant une cavité (6, 7) débouchant à l'extrémité de liaison de la pièce en forme de barre (1, 2), cavité dans laquelle est tenu un goujon de liaison (10, 11) pour réaliser la liaison avec l'autre pièce en forme de barre (1, 2), la liaison se faisant par un siège pressé,
crémaillère ou tige filetée **caractérisées en ce que**
- une pièce de liaison (3), distincte, ayant un premier et un second goujon de liaison (10, 11), réalise la liaison de la première pièce (1, 2) en forme de barre avec la seconde pièce en forme de barre (1, 2),
- le premier goujon de liaison (10) est tenu dans la cavité (6) de la première extrémité de liaison (8) de la première pièce en forme de barre (1), et le second goujon de liaison (11) est tenu dans la cavité (7) débouchant dans l'extrémité de liaison (9) de la seconde pièce (2) en forme de barre, en étant tenu chaque fois par un siège pressé, la pièce de liaison (3) reliant les deux pièces en forme de barre (1, 2) par des sièges pressés,
- un goujon de liaison (10, 11) installé respectivement dans la cavité (6, 7) de la pièce respective (1, 2) en forme de barre, est muni au niveau du siège pressé, de surépaisseurs de matière (12) obtenues par déformation, et
- la liaison est réalisée de façon que les surépaisseurs de matière (12) forment la surépaisseur nécessaire au siège pressé, du diamètre extérieur du goujon de liaison (10, 11) par rapport au diamètre intérieur de la cavité (6, 7) dans laquelle est tenu le goujon de liaison (10, 11), et lors de l'enfoncement du goujon de liaison respectif (10, 11) dans la cavité (6, 7) de la pièce en forme de barre (1, 2), l'augmentation du diamètre extérieur de la pièce en forme de barre (1, 2), respective, est inférieure à 0,2 mm.

2. Crémaillère ou tige filetée selon la revendication 1,
**caractérisées en ce que**
les surépaisseurs de matière (12) réalisées par déformation, sont des nervures périphériques, des bourrelets ou des dents.

3. Crémaillère ou tige filetée selon la revendication 1 ou 2,
**caractérisées en ce que**
la longueur par laquelle le premier goujon de liaison (10) est relié à la première pièce en forme de barre (1) par un siège pressé est supérieure à la longueur de la liaison entre le second goujon de liaison (11) et la seconde pièce en forme de barre (2) par le siège pressé.

4. Crémaillère ou tige filetée selon l'une des revendications 1 à 3,
**caractérisées en ce que**
la pièce de liaison (3) comporte une collerette (14) entre le premier et le second goujon de liaison (10, 11), cette collerette ayant des surfaces d'appui (15) pour venir en appui contre les surfaces frontales de la première et de la seconde pièce en forme de barre (1, 2).

5. Crémaillère ou tige filetée selon l'une des revendications précédentes,
**caractérisées par**
au moins une cavité (6, 7) recevant l'un des goujons de liaison (10, 11), de préférence une cavité (6, 7) respective pour chacun des goujons de liaison (10, 11), ayant une extension en forme d'entonnoir vers l'extrémité de liaison (8, 9).

6. Crémaillère ou tige filetée selon l'une des revendications précédentes,
**caractérisées en ce que**
la première et/ou la seconde pièce en forme de barre (1, 2) est munie d'un enfoncement (28) pénétrant dans une cavité du goujon de liaison (10, 11) pour assurer la liaison avec celui-ci.

7. Crémaillère ou tige filetée selon l'une des revendications précédentes,
**caractérisées en ce que**
la cavité (6, 7) de la première et/ou de la seconde pièce en forme de barre (1, 2) s'étend sur au moins la plus grande partie de la longueur et de préférence sur toute la longueur de la pièce en forme de barre (1, 2).

8. Crémaillère ou tige filetée selon l'une des revendications précédentes,
**caractérisées en ce que**
la pièce de liaison (3) comporte un canal intérieur (16).

9. Crémaillère ou tige filetée selon l'une des revendications précédentes,
**caractérisées en ce que**
la pièce de liaison (3) est droite et les goujons de liaison (10, 11) s'étendent axialement dans des directions opposées.

10. Crémaillère ou tige filetée selon l'une des revendications précédentes,
**caractérisées en ce qu'**
au moins une cavité (6, 7) recevant un goujon de liaison (10, 11) et de préférence chacune des cavités (6, 7) recevant un goujon de liaison (10, 11) comporte une surépaisseur de matière sur sa paroi (13) sur un segment de son extension longitudinale réalisant le siège pressé,

11. Crémaillère ou tige filetée selon la revendication 10,
**caractérisées en ce que**
les surépaisseurs de matière sont réalisées sous la forme de nervures, de bourrelets ou de dents dirigées dans la direction axiale.

12. Dispositif de direction de véhicule automobile comportant une crémaillère ou tige filetée selon l'une des revendications 1 à 11,

13. Procédé de réalisation d'une crémaillère ou d'une tige filetée de dispositif de direction de véhicule automobile comportant :
- une première pièce en forme de barre (1), ayant comme élément fonctionnel de la crémaillère ou de la tige filetée, au moins un élément pour transformer un mouvement de rotation en un mouvement de translation, notamment une denture (4) et/ou un filetage pour la prise d'un écrou ou d'un entraînement à denture, et
- une seconde pièce (2) en forme de barre, reliée à la première pièce en forme de barre (1) et comportant, de préférence, au moins un autre élément fonctionnel de la crémaillère ou de la tige filetée,
- au moins l'une des pièces en forme de barre (1, 2) ayant une cavité (6, 7) débouchant à l'extrémité de liaison de la pièce en forme de barre (1, 2), cavité dans laquelle un goujon de liaison (10, 11) est tenu par un siège pressé pour réaliser la liaison avec l'autre pièce en forme de barre (1, 2),
crémaillère ou tige filetée **caractérisées en ce qu'**
- on réalise la liaison de la première pièce (1, 2) en forme de barre avec la seconde pièce en forme de barre (1, 2) par une pièce de liaison (3), distincte, ayant un premier et un second goujon de liaison (10, 11), ces goujons étant munis dans la zone respective du siège pressé à réaliser, avec chaque pièce en forme de barre (1, 2), de surépaisseurs de matière (12) obtenues par transformation et dont la hauteur se situe dans une plage de 0,03 mm à 0,4 mm, le premier goujon de liaison (10) étant tenu dans la cavité (6) de la première extrémité de liaison (8) de la première pièce en forme de barre (1), et le second goujon de liaison (11) étant tenu dans la cavité (7) débouchant dans l'extrémité de liaison (9) de la seconde pièce (2) en forme de barre, chaque fois par un siège pressé,
- la pièce de liaison (3) reliant les deux pièces en forme de barre (1, 2) par les sièges pressés, ainsi réalisés,
- la liaison est réalisée de façon que la réalisation des surépaisseurs de matière (12) forme l'augmentation nécessaire du diamètre extérieur du goujon de liaison (10, 11) par rapport au diamètre intérieur de la cavité (6, 7) dans laquelle est pressé le goujon de liaison (10, 11), et lors de l'enfoncement du goujon de liaison respectif (10, 11) dans la cavité (6, 7) de la pièce en forme de barre (1, 2), l'augmentation du diamètre extérieur de la pièce en forme de barre (1, 2), respective, est inférieure à 0,2 mm.
